# EUROPEAN PATENT SPECIFICATION

(11) **EP 4 454 176 B1**
(45) Date of publication and mention of the grant of the patent: **28.10.2026**
(21) Application number: 23700101.1
(22) Date of filing: 06.01.2023
(51) Int. Cl.: H04L 1/00, H04L 1/1829, H04L 1/1867

(54) **WIRELESS TELECOMMUNICATIONS APPARATUSES AND METHODS**
DRAHTLOSE TELEKOMMUNIKATIONSVORRICHTUNGEN UND VERFAHREN
APPAREILS ET PROCÉDÉS DE TÉLÉCOMMUNICATION SANS FIL

(30) Priority: 01.02.2022 EP 22154625
(43) Date of publication of application: 30.10.2024
(60) Divisional application: 26202625.5 / 4 832 391
(73) Proprietor: Sony Group Corporation, Tokyo 108-0075 (JP); Sony Europe B.V., Weybridge, Surrey KT13 0XW (GB)
(72) Inventor: AWAD, Yassin Aden, Basingstoke Hampshire RG22 4SB (GB); ATUNGSIRI, Samuel Asangbeng, Basingstoke Hampshire RG22 4SB (GB); BEALE, Martin Warwick, Basingstoke Hampshire RG22 4SB (GB); WONG, Shin Horng, Basingstoke Hampshire RG22 4SB (GB)
(74) Representative: D Young & Co LLP
(86) International application number: PCT/EP2023/050225
(87) International publication number: WO 2023/147955

(56) References cited:
- WO-A1-2021/040350
- WO-A1-2021/047973
- WO-A1-2021/059184
- MODERATOR (NTT DOCOMO ET AL: "Summary on Rel-17 TEIs", vol. RAN WG1, no. e-Meeting; 20211011 - 20211019, 21 October 2021 (2021-10-21), XP052065826, Retrieved from the Internet <URL:https://ftp.3gpp.org/tsg_ran/WG1_RL1/TSGR1_106b-e/Inbox/R1-2109722.zip R1-2109722 Summary on Rel-17 TEIs.docx> [retrieved on 20211021]

## Description

### BACKGROUND

### Field of the Disclosure

The present disclosure relates to wireless telecommunications apparatuses and methods.

### Description of the Related Art

The "background" description provided is for the purpose of generally presenting the context of the disclosure. Work of the presently named inventors, to the extent it is described in the background section, as well as aspects of the description which may not otherwise qualify as prior art at the time of filing, are neither expressly or impliedly admitted as prior art against the present disclosure.

Recent generation mobile telecommunication systems, such as those based on the 3^{rd} Generation Partnership Project (3GPP (RTM)) defined Universal Mobile Telecommunications System (UMTS), Long Term Evolution (LTE) and 5G New Radio (NR) architectures, are able to support a wider range of services than simple voice and messaging services offered by previous generations of mobile telecommunication systems. For example, with the improved radio interface and enhanced data rates provided by LTE and NR systems, a user can experience high data rate applications such as mobile video streaming and mobile video conferencing that would previously only have been available via a fixed line data connection.

In addition to supporting these kinds of more sophisticated services and devices, it is also proposed for newer generation mobile telecommunication systems such as NR to support less complex services and devices which make use of the reliable and wide ranging coverage of newer generation mobile telecommunication systems without necessarily needing to rely on the high data rates available in such systems. For example, a less complex device may be a tiny device equipped with sensors and a small battery capacity. Such a less complex device needs to transmit the sensor data at a typically infrequent and/or low data rate.

The demand to deploy such networks is therefore strong and there is a desire to improve the coverage area of these networks, i.e. geographic locations where access to the networks is possible.

Cited references include WO 2021/059184 A1 discussing SEMI-DYNAMIC CONFIGURATION FOR MOBIFE SYSTEM

WO 2021/040350 A1 discussing METHOD AND APPARATUS FOR TRANSMITTING AND RECEIVING WIRELESS SIGNAL IN WIRELESS COMMUNICATION SYSTEM

WO 2021/047973 A1 discussing SWITCHING WAVEFORMS FOR UPLINK TRANSMISSION IN NR NETWORK

R1-2109722 discussing Rel-17 TEls

### SUMMARY

The present disclosure is defined by the claims.

### BRIEF DESCRIPTION OF THE DRAWINGS

Non-limiting embodiments and advantages of the present disclosure are explained with reference to the following detailed description taken in conjunction with the accompanying drawings, wherein:
Fig. 1 schematically represents some elements of an LTE-type wireless telecommunications system;
Fig. 2 schematically represents some elements of an NR-type wireless telecommunications system;
Fig. 3 schematically represents some components of the wireless telecommunications system shown in Fig. 2 in more detail;
Figs. 4A and 4B show first example methods of controlling a wireless telecommunications apparatus; and
Figs. 5A and 5B show second example methods of controlling a wireless telecommunications apparatus.

Like reference numerals designate identical or corresponding parts throughout the drawings.

### DETAILED DESCRIPTION OF THE EMBODIMENTS

### Long Term Evolution (LTE) Wireless Communications System

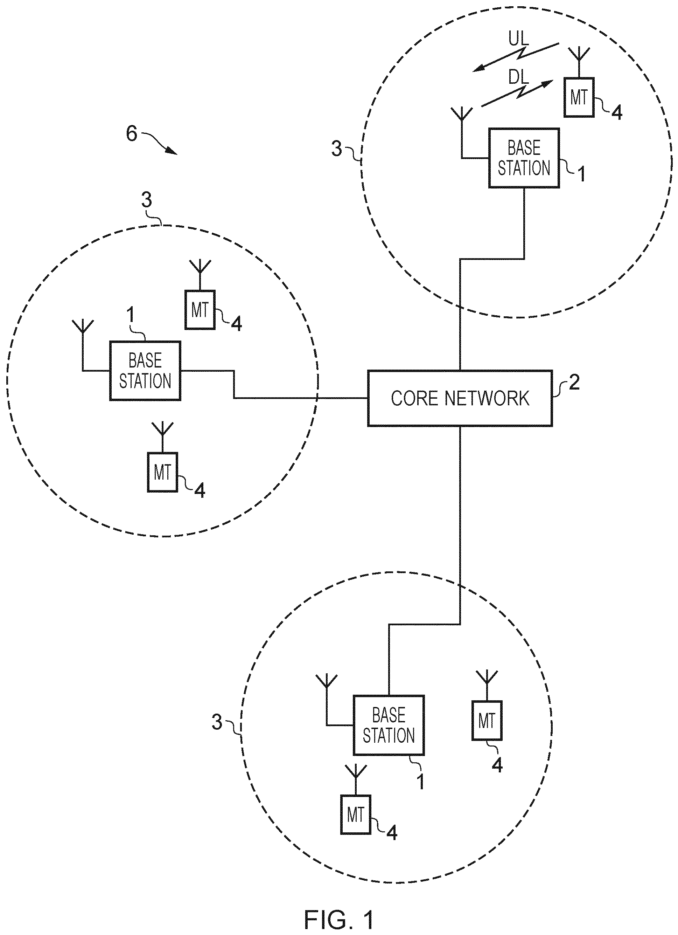

Fig. 1 provides a schematic diagram illustrating some basic functionality of a mobile telecommunications network / system 6 operating generally in accordance with LTE principles, but which may also support other radio access technologies, and which may be adapted to implement embodiments of the disclosure as described herein. Various elements of Fig. 1 and certain aspects of their respective modes of operation are well-known and defined in the relevant standards administered by the 3GPP body, and also described in many books on the subject, for example, Holma, H. and Toskala, A [1]. It will be appreciated that operational aspects of the telecommunications networks discussed herein which are not specifically described (for example in relation to specific communication protocols and physical channels for communicating between different elements) may be implemented in accordance with any known techniques, for example according to the relevant standards and known proposed modifications and additions to the relevant standards.

The network 6 includes a plurality of base stations 1 connected to a core network 2. Each base station provides a coverage area 3 (i.e. a cell) within which data can be communicated to and from communications devices 4.

Although each base station 1 is shown in Fig. 1 as a single entity, the skilled person will appreciate that some of the functions of the base station may be carried out by disparate, inter-connected elements, such as antennas (or antennae), remote radio heads, amplifiers, etc. Collectively, one or more base stations may form a radio access network.

Data is transmitted from base stations 1 to communications devices 4 within their respective coverage areas 3 via a radio downlink (DL). Data is transmitted from communications devices 4 to the base stations 1 via a radio uplink (UL). The core network 2 routes data to and from the communications devices 4 via the respective base stations 1 and provides functions such as authentication, mobility management, charging and so on. A communications device may also be referred to as a mobile station, user equipment (UE), user terminal, mobile radio, terminal device and so forth.

Services provided by the core network 2 may include connectivity to the internet or to external telephony services. The core network 2 may further track the location of the communications devices 4 so that it can efficiently contact (i.e. page) the communications devices 4 for transmitting downlink data towards the communications devices 4.

A base station, which is an example of network infrastructure equipment, may also be referred to as a transceiver station, nodeB, e-nodeB, eNB, g-nodeB, gNB and so forth (note g-nodeB and gNB are related to 5G New Radio - see below). In this regard different terminology is often associated with different generations of wireless telecommunications systems for elements providing broadly comparable functionality. However, certain embodiments of the disclosure may be equally implemented in different generations of wireless telecommunications systems, and for simplicity certain terminology may be used regardless of the underlying network architecture. That is to say, the use of a specific term in relation to certain example implementations is not intended to indicate these implementations are limited to a certain generation of network that may be most associated with that particular terminology.

In the present disclosure, any apparatus (e.g. communications device, infrastructure equipment and the like) which transmits and/or receives wireless telecommunications signals in any of the exemplified wireless telecommunication networks / systems may be referred to generally as a wireless telecommunications apparatus.

### 5G New Radio (NR) Wireless Communications System

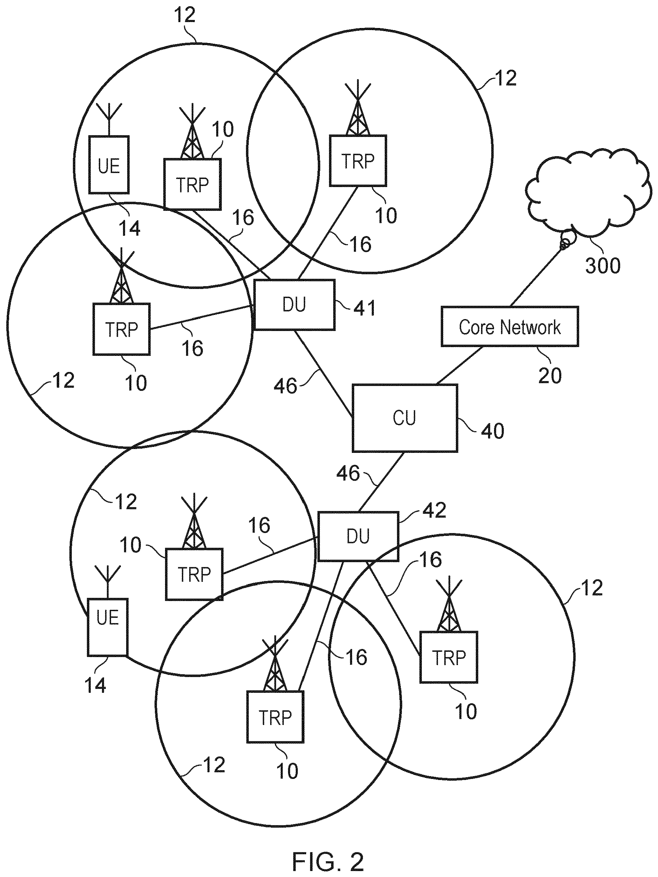

An example configuration of a wireless communications network which uses some of the terminology proposed for NR is shown in Fig. 2. In Fig. 2 a plurality of transmission and reception points (TRPs) 10 are connected to distributed control units (DUs) 41, 42 by a connection interface represented as a line 16. Each of the TRPs 10 is arranged to transmit and receive signals via a wireless access interface within a radio frequency bandwidth available to the wireless communications network. Thus, within a range for performing radio communications via the wireless access interface, each of the TRPs 10, forms a cell of the wireless communications network as represented by a circle 12. As such, wireless communications devices 14 which are within a radio communications range provided by the cells 12 can transmit and receive signals to and from the TRPs 10 via the wireless access interface. Each of the distributed units 41, 42 are connected to a central unit (CU) 40 (which may be referred to as a controlling node) via an interface 46. The central unit 40 is then connected to a core network 20 which may contain all other functions required for communicating data to and from the wireless communications devices and the core network 20. The core network 20 may be connected to other networks 300.

The elements of the wireless access network shown in Fig. 2 may operate in a similar way to corresponding elements of an LTE network as described with regard to the example of Fig. 1. It will be appreciated that operational aspects of the telecommunications network represented in Fig. 2 and of other networks discussed herein in accordance with embodiments of the disclosure which are not specifically described (for example in relation to specific communication protocols and physical channels for communicating between different elements) may be implemented in accordance with any known techniques, for example according to currently used approaches for implementing such operational aspects of wireless telecommunications systems, e.g. in accordance with the relevant standards.

The TRPs 10 of Fig. 2 may in part have a corresponding functionality to a base station or eNodeB of an LTE network. Similarly, the communications devices 14 may have a functionality corresponding to the UE devices 4 known for operation with an LTE network. It will be appreciated, therefore, that operational aspects of an NR network (for example in relation to specific communication protocols and physical channels for communicating between different elements) may be different to those known from LTE or other known mobile telecommunications standards. However, it will also be appreciated that each of the core network component, base stations and communications devices of an NR network will be functionally similar to, respectively, the core network component, base stations and communications devices of an LTE wireless communications network.

In terms of broad top-level functionality, the core network 20 connected to the NR telecommunications system represented in Fig. 2 may be broadly considered to correspond with the core network 2 represented in Fig. 1, and the central unit 40 and associated DUs 41, 42 / TRPs 10 may be broadly considered to provide functionality corresponding to the base stations 1 of Fig. 1. The term network infrastructure equipment / access node may be used to encompass these elements and more conventional base station type elements of wireless telecommunications systems. Depending on the application at hand the responsibility for scheduling transmissions which are scheduled on the radio interface between the respective distributed units and the communications devices may lie with the CU 40, DUs 41, 42 and/or TRPs 10. Communications devices 14 are represented in Fig. 2 within the coverage area of respective communication cells 12. These communications devices 14 may thus exchange signalling with the CU 40 via the TRP 10 associated with their respective communication cells 12.

It will further be appreciated that Fig. 2 represents merely one example of a proposed architecture for an NR-based telecommunications system in which approaches in accordance with the principles described herein may be adopted, and the functionality disclosed herein may also be applied in respect of wireless telecommunications systems having different architectures.

Thus certain embodiments of the disclosure as discussed herein may be implemented in wireless telecommunication systems / networks according to various different architectures, such as the example architectures shown in Figs. 1 and 2. It will thus be appreciated the specific wireless telecommunications architecture in any given implementation is not of primary significance to the principles described herein. In this regard, certain embodiments of the disclosure may be described generally in the context of communications between network infrastructure equipment / access nodes and a communications device, wherein the specific nature of the network infrastructure equipment / access node and the communications device will depend on the network infrastructure for the implementation at hand. For example, in some scenarios the network infrastructure equipment / access node may comprise a base station, such as an LTE-type base station 1 as shown in Fig. 1 which is adapted to provide functionality in accordance with the principles described herein, and in other examples the network infrastructure equipment may comprise a CU 40, DU 41, 42 and / or TRP 10 of the kind shown in Fig. 2 which is adapted to provide functionality in accordance with the principles described.

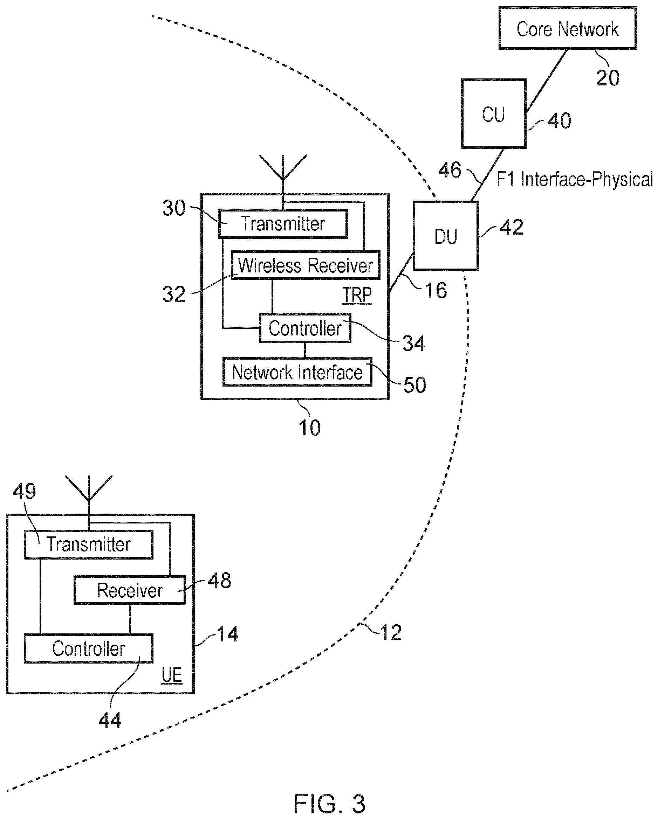

A more detailed diagram of some of the components of the network shown in Fig. 2 is provided by Fig. 3. In Fig. 3, a TRP 10 as shown in Fig. 2 comprises, as a simplified representation, a wireless transmitter 30, a wireless receiver 32 and a controller or controlling processor 34 which is configured to control the transmitter 30 and the receiver 32 to transmit radio signals to and receive radio signals from one or more UEs 14 within a cell 12 formed by the TRP 10. As shown in Fig. 3, an example UE 14 is shown to include a corresponding wireless transmitter 49, wireless receiver 48 and a controller or controlling processor 44 which is configured to control the transmitter 49 to transmit signals representing uplink data to the wireless communications network via the wireless access interface formed by the TRP 10 and the receiver 48 to receive downlink data as signals transmitted by the transmitter 30.

The transmitters 30, 49 and the receivers 32, 48 (as well as other transmitters, receivers and transceivers described in relation to examples and embodiments of the present disclosure) may include radio frequency filters and amplifiers as well as signal processing components and devices in order to transmit and receive radio signals in accordance, for example, with the 5G/NR standard. The controllers 34, 44 (as well as other controllers described in relation to examples and embodiments of the present disclosure) may be, for example, a microprocessor, a CPU, or a dedicated chipset, etc., configured to carry out instructions which are stored on a computer readable medium, such as a non-volatile memory. The processing steps described herein may be carried out by, for example, a microprocessor in conjunction with a random access memory, operating according to instructions stored on a computer readable medium.

As shown in Fig. 3, the TRP 10 also includes a network interface 50 which connects to the DU 42 via a physical interface 16. The network interface 50 therefore provides a communication link for data and signalling traffic from the TRP 10 via the DU 42 and the CU 40 to the core network 20.

The interface 46 between the DU 42 and the CU 40 is known as the F1 interface which can be a physical or a logical interface. The F1 interface 46 between CU and DU may operate in accordance with specifications 3GPP TS 38.470 and 3GPP TS 38.473 and, for example, may be formed from a fibre optic or other wired high bandwidth connection. In one example, the connection 16 from the TRP 10 to the DU 42 is fibre optic. The connection between a TRP 10 and the core network 20 can be generally referred to as a backhaul, which comprises the interface 16 from the network interface 50 of the TRP10 to the DU 42 and the F1 interface 46 from the DU 42 to the CU 40.

It is desirable to be able to improve cell coverage, especially for UEs located at the edge of a cell. 3GPP has already completed a base version of 5G in 3GPP Release 15 known as New Radio (NR) and further enhancements have been added in 3GPP Releases 16 and 17. In these releases, the transmission in the downlink is based on a CP-OFDM (Cyclic Prefix - Orthogonal Frequency Division Multiplexing) waveform while the uplink can use either CP-OFDM or DFT-S-OFDM (Discrete Fourier Transform spread Orthogonal Frequency Division Multiplexing) waveforms.

A benefit of supporting DFT-S-OFDM in the uplink is to increase the coverage due to its lower PAPR (peak-to-average power ratio) than CP-OFDM, particularly when a UE is at the cell edge. The lower PAPR allows the UE to transmit with a higher average power which improves the UL coverage. DFT-S-OFDM is also known as SC-FDMA (Single Carrier - Frequency Division Multiple Access) or transform precoding. Alternatively, the UE can transmit at the same radiated power level in a more efficient manner since the power amplifier in the UE can be operated with less backoff. However, DFT-S-OFDM as implemented in 3GPP Release 15 to Release 17 supports only single stream / layer transmission in order to reduce implementation complexity.

In terms of informing a UE of which waveform to use in the uplink, a UE receives higher layer "broadcast" signalling (in e.g. System Information Block 1, SIB1) to enable or disable the usage of DFT-S-OFDM for message 3 (Msg3) transmission during the random access procedure. Alternatively, a UE may receive dedicated (e.g., Radio Resource Control, RRC) signalling as a part of PUSCH (Physical Uplink Shared Channel) configuration for UL transmissions. The configuration details to support both CP-OFDM and DFT-S-OFDM in the uplink are captured in [2], section 6.1.3, for example.

However, it is realised that these methods of specifying the use of the CP-OFDM or DFT-S-OFDM waveform in the uplink are relatively limited and inflexible. More dynamic switching is desired to, for example, enable a UE located at a cell edge to more easily switch to using the DFT-S-OFDM waveform to improve cell coverage.

In 3GPP Release 18, a new work item (WI) [3] has been approved which captures the justification of enhancing the use of DFT-S-OFDM in the uplink. It also highlights the problems with the current (e.g. SIB1- or RRC-based) approach and the need for enhancements to support dynamic switching between DFT-S-OFDM and CP-OFDM. [4] also provides a further discussion on some technical considerations and potential benefits of such dynamic switching.

The present technique helps address this problem of how to allow a UE to dynamically switch which waveform it uses for its next uplink transmission.

The present technique provides a number of efficient methods to dynamically switch between DFT-S-OFDM and CP-OFDM uplink waveforms. For example, the uplink waveform may be indicated for each scheduled UL transmission (e.g. by being explicitly or implicitly indicated in the scheduling Downlink Control Information, DCI). In another example, the uplink waveform is semi-persistently scheduled and the indicated waveform is applicable for a pre-determined duration or until an update to the waveform is signaled. In another example, the uplink waveform is semi-statically configured but there are opportunities for the network scheduler to flexibly change the uplink waveform. These examples are explained in more detail below.

In order to support dynamic switching between DFT-S-OFDM and CP-OFDM waveforms according to the examples, some signaling is necessary to indicate which waveform a UE can apply for its UL transmission.

### Explicit indication via the scheduling DCI

In a first example, the uplink waveform for each scheduled UL transmission is explicitly indicated in the scheduling DCI.

In an embodiment, one bit in the DCI is used to indicate either the DFT-S-OFDM or CP-OFDM waveform. This may be a new bit in the DCI or one or more existing bits in the DCI can be repurposed to indicate which waveform the UE should apply for its scheduled UL transmission.

For CG (Configured Grant) PUSCH, more specifically CG Type 2, the activation DCI / command can contain the bit to inform the UE that transmissions of CG PUSCH should apply either the DFT-S-OFDM or CP-OFDM waveform. Such a 1-bit indicator may also be used in the activation DCI for SPS (Semi-Persistent Scheduling) PDSCH (Physical Downlink Shared Channel) and is applicable to the waveform of the PUCCH (Physical Uplink Control Channel) used to carry the HARQ (Hybrid Automatic Repeat Request) feedback (e.g. HARQ-ACK / NACK) for the SPS PDSCH.

In an embodiment, when the activation DCI indicates the waveform for CG-PUSCH Type 2 or SPS PDSCH, the indicated waveform is applicable to the first M transmissions or *M* transmission opportunities. CG-PUSCH and SPS PDSCH are periodic resources semi-statically configured in the UL and DL respectively. They are used for periodic traffic and reduce the need for constant UL Grant or DL Grant transmissions, respectively. It should be appreciated that these periodic UL and DL resources may not be used for transmission. However, these periodic resources provide transmission opportunities which the UE (in the case of UL) or the gNB (in the case of DL) can use if they have data to transmit. In this embodiment, only the first *M* transmissions or *M* transmission opportunities use the indicated waveform and the remaining transmissions use the semi-statically configured waveform. This recognizes that the condition of the UE may change and that the waveform that is beneficial when the activation DCI is transmitted may no longer be beneficial after *M* transmissions.

For example, the UE may firstly be at cell edge when the activation DCI is received but may then move towards the cell centre after several periods of CG-PUSCH / SPS PDSCH. For example, the UE is configured with a default semi-static waveform, such as CP-OFDM, for PUSCH. If *M*=1 and an activation DCI for CG-PUSCH indicates the DFT-S-OFDM waveform is to be used, the UE therefore applies DFT-S-OFDM on the 1^{st} CG-PUSCH transmission after receiving the activation DCI for that CG-PUSCH and the remaining transmissions (i.e., 2^{nd}, 3^{rd}, 4^{th}, etc. CG-PUSCH transmissions) use CP-OFDM (i.e., the default semi-static waveform). The value *M* may be RRC configured, specified in the specifications or dynamically indicated in the activation DCI, for example.

In an embodiment, the time domain resource allocation (TDRA) field in NR is used for waveform indication. The TDRA is a field in the DCI that indicates a number of symbols within a slot allocated for the UE to transmit PUSCH. The TDRA is specified in table entries. For example, the default table captured in [2], section 6.1.2.1.1-2, is copied below (with an additional column, as explained below) as Table 1. There are a number of parameters included in the default table, for example PUSCH mapping type, the time gap between the UL scheduling DCI and the corresponding PUSCH (***K*₂**)**,** starting symbol of PUSCH **(S)** and the PUSCH duration **(L)** in the slot. In this example, an additional column (the rightmost column) is added to the table to indicate whether the allocation defined in each row applies to DFT-S-OFDM or CP-OFDM. Thus, based on the table index indicated in the TDRA field, the UE is able to determine whether the waveform for the PUSCH should be DFT-S-OFDM or CP-OFDM.

**Table 1**

| **Row index** | **PUSCH mapping type** | ***K*₂** | ***S*** | ***L*** | ***Waveform*** |
|---|---|---|---|---|---|
| 1 | Type A | *j* | 0 | 14 | DFT-S-OFDM |
| 2 | Type A | *j* | 0 | 12 | CP-OFDM |
| 3 | Type A | *j* | 0 | 10 | DFT-S-OFDM |
| 4 | Type B | *j* | 2 | 10 | CP-OFDM |
| 5 | Type B | *j* | 4 | 10 | DFT-S-OFDM |
| 6 | Type B | *j* | 4 | 8 | CP-OFDM |
| 7 | Type B | *j* | 4 | 6 | DFT-S-OFDM |
| 8 | Type A | *j*+1 | 0 | 14 | CP-OFDM |
| 9 | Type A | *j*+1 | 0 | 12 | DFT-S-OFDM |
| 10 | Type A | *j*+1 | 0 | 10 | CP-OFDM |
| 11 | Type A | *j*+2 | 0 | 14 | DFT-S-OFDM |
| 12 | Type A | *j*+2 | 0 | 12 | CP-OFDM |
| 13 | Type A | *j*+2 | 0 | 10 | DFT-S-OFDM |
| 14 | Type B | *j* | 8 | 6 | CP-OFDM |
| 15 | Type A | *j*+3 | 0 | 14 | DFT-S-OFDM |
| 16 | Type A | *j*+3 | 0 | 10 | CP-OFDM |

Table 2 shows a variation of Table 1. In Table 1, each indication of DFT-S-OFDM or CP-OFDM is associated with different values of {PUSCH mapping type, K₂, S, L}. On the other hand, in Table 2, DFT-S-OFDM or CP-OFDM can be indicated for the same values of {PUSCH mapping type, K₂, S, L}.

**Table 2**

| **Row index** | **PUSCH mapping type** | ***K*₂** | ***S*** | ***L*** | ***Waveform*** |
|---|---|---|---|---|---|
| 1 | Type A | *j* | 0 | 14 | DFT-S-OFDM |
| 2 | Type A | *j* | 0 | 14 | CP-OFDM |
| 3 | Type A | *j* | 0 | 10 | DFT-S-OFDM |
| 4 | Type A | *j* | 0 | 10 | CP-OFDM |
| 5 | Type B | *j* | 4 | 8 | DFT-S-OFDM |
| 6 | Type B | *j* | 4 | 8 | CP-OFDM |
| 7 | Type B | *j* | 4 | 6 | DFT-S-OFDM |
| 8 | Type A | *j*+1 | 0 | 14 | CP-OFDM |
| 9 | Type A | *j*+1 | 0 | 14 | DFT-S-OFDM |
| 10 | Type A | *j*+1 | 0 | 10 | CP-OFDM |
| 11 | Type A | *j*+1 | 0 | 10 | DFT-S-OFDM |
| 12 | Type A | *j*+2 | 0 | 12 | CP-OFDM |
| 13 | Type A | *j*+2 | 0 | 12 | DFT-S-OFDM |
| 14 | Type B | *j* | 8 | 6 | CP-OFDM |
| 15 | Type A | *j*+3 | 0 | 14 | DFT-S-OFDM |
| 16 | Type A | *j*+3 | 0 | 14 | CP-OFDM |

The DL grant scheduling a PDSCH also schedules a PUCCH to carry the HARQ-ACK / NACK for that PDSCH. One of the PUCCH scheduling fields used in the DL Grant is the PRI (PUCCH Resource Indicator). The PRI points to an index of a PUCCH Resource Set table where each index maps to a PUCCH resource (e.g., frequency resource) and PUCCH format of the scheduled PUCCH. In an embodiment, a new parameter is also configured in the PUCCH Resource Set that also indicates the waveform the UE should use. For example, a subset of the indices in the PUCCH Resource Set indicates DFT-S-OFDM whilst another subset indicates CP-OFDM.

### Implicit indication via the scheduling DCI

In a second example, the uplink waveform for each scheduled UL transmission is implicitly indicated in the scheduling DCI.

In NR, there are two types of DCI, fallback and normal DCls. Fallback DCls are applicable during initial access as well as when the UE is in connected mode. The content and size of fallback DCIs do not change (i.e., the content and size are fixed) during initial access and when the UE moves to connected mode. On the other hand, normal DCls are only used when the UE is in connected mode and their content and size are configurable by RRC signaling. In an embodiment, in order to support dynamic switching between DFT-S-OFDM and CP-OFDM waveforms, fallback DCls are associated with DFT-S-OFDM whilst normal DCls are associated with CP-OFDM (or vice versa). For example, if the UE is scheduled PUSCH using a fallback DCI, the UE transmits that PUSCH using the DFT-s-OFDM waveform, whereas if it is scheduled using a normal DCI, the UE transmits using the CP-OFDM waveform.

In the current specifications, a UE in connected mode can monitor a DCI masked with different UE-specific Radio Network Temporary Identifiers (RNTIs) such as C-RNTI, CS-RNTI, MCS-C-RNTI and SP-CSI-RNTI. Masking of the DCI can be achieved in various ways, including masking a cyclic redundancy check (CRC) of the DCI with the RNTI (e.g. by performing an exclusive-OR operation of the CRC with the RNTI) or generating a scrambling sequence as a function of the RNTI and performing an exclusive-OR operation of the bits carried by the DCI with the scrambling sequence. In an embodiment, the use of these RNTIs indicates CP-OFDM whereas new RNTIs are specified to indicate DFT-S-OFDM. The new RNTIs may be named, for example, DFT-C-RNTI, DFT-CS-RNTI, DFT-MCS-C-RNTI and DFT-SP-CSI-RNTI (that is, DFT-S-OFDM equivalents of the existing RNTIs for which CP-OFDM is the default indication). Alternatively, the existing RNTIs may indicate DFT-S-OFDM and new RNTIs may be specified to indicate CP-OFDM.

In an embodiment, the legacy MCS-C-RNTI is used to differentiate between DFT-S-OFDM and CP-OFDM. In 3GPP Release 15, a UE may be dynamically signaled (e.g., by masking the DCI) via an MCS-C-RNTI which indicates use of a more robust MCS table (e.g., to provide higher reliability) or via a C-RNTI which indicates use of the default MCS table (which is designed for enhanced Mobile Broadband (eMBB)-like traffic, for example). The more robust MCS table associated with the MCS-C-RNTI may be beneficial for cell edge UEs (as such a table has Modulation and Coding Scheme (MCS) entries with lower coding rates compared to the default MCS table). The more robust MCS table may further benefit from the use of DFT-S-OFDM to help extend the cell edge coverage further. Thus, the more robust MCS table is used and DFT-S-OFDM is used if the DL Grant / UL Grant has CRC (cyclic redundancy check) masked with MCS-C-RNTI. Otherwise (i.e., if C-RNTI is used), the default MCS table is used and CP-OFDM is used.

When a UE is at the cell-edge, it is likely that the UE is configured with repetitions in order to increase the coverage. In an embodiment, the repetition information is associated with whether or not to use DFT-S-OFDM. For example, whenever a UE is scheduled with repetitions with a repetition factor (e.g., number of repetitions) greater than a threshold X, the UE applies DFT-S-OFDM for the scheduled UL transmission. Otherwise (i.e., if the repetition factor is less than or equal to X), the UE uses CP-OFDM. The value of X can be fixed in the specifications, e.g., X=1, or RRC configured.

In an embodiment, the first Y repetitions may use one waveform (e.g., one which is indicated, implicitly or explicitly) and the remaining repetitions after the first Y repetitions may use the other waveform. For example, if a PUSCH has 4 repetitions and Y=2, the 1^{st} and 2^{nd} repetitions may use DFT-S-OFDM and the 3^{rd} and 4^{th} repetitions may use CP-OFDM. This allows some of the repetitions to benefit from the lower PAPR offered by DFT-S-OFDM. At the same time, since the use of DFT-S-OFDM requires a contiguous set of resource blocks (that is, a set of resources which are contiguous in the frequency domain), using CP-OFDM (which does not require a contiguous set of resource blocks) for the remaining repetitions means the frequency resources used for these remaining repetitions may be fragmented. This allows frequency resources to be used more flexibly. For example, the scheduler may have contiguous resources available in the first Y repetitions (these contiguous resources being suitable for DFT-S-OFDM) and only have non-contiguous resources available in the following repetitions (or not yet know whether it is contiguous or non-contiguous resources which will be available). In this case, the network can schedule DFT-S-OFDM in the Y repetitions that are known to be contiguous and CP-OFDM in the other repetitions.

In an embodiment, the waveform may alternate for repeated sets of transmissions. For example, the first M repetitions use DFT-S-OFDM, the next N repetitions use CP-OFDM, the next M repetitions use DFT-S-OFDM, and so on. Note M and N can have the same value. In an example, M=N=1 and therefore every alternate repetition uses a different waveform.

In the current specifications, there are 4 PUCCH Resource Sets. Each set contains a list of 8 or 32 PUCCH Resources that the UE can use to carry UCI (Uplink Control Information) such as SR (Scheduling Request), CSI (Channel State Information) and HARQ-ACK / NACK. The UE determines the PUCCH Resource Set and a PRI is then used to indicate which of the 8 or 32 PUCCH Resources in the determined PUCCH Resource Set the UE should use. The PUCCH Resource Set is determined using the total number of UCI bits that the UE needs to transmit in a single PUCCH. In an embodiment, each PUCCH Resource Set is also associated with a waveform. Thus, by determining the PUCCH Resource Set, the UE also knows the waveform to use for the PUCCH. It should be noted that, in an example, some PUCCH Formats, such as Format 0 or 1, use a sequence-based waveform and hence, for these PUCCH Formats, the associated waveform (either DFT-S-OFDM or CP-OFDM) is not applicable. Thus, the waveform (DFT-S-OFDM or CP-OFDM) associated with the PUCCH Resource Set is only applicable to PUCCH Resources in sets that do not use PUCCH Format 0 or 1.

### Semi-persistent UL waveform

In semi-persistent indication of the UL waveform, the indicator provides the UE with, for example, a waveform or a timetable of which waveform to use at which OFDM symbol. This reduces the amount of signaling required (e.g., compared to the waveform being signaled using a DL or UL grant.)

In the current specifications, the Slot Format Indicator (SFI) carried by group common DCI (GC-DCI) can change a FL-symbol (flexible symbol) to either a DL or UL symbol (see 3GPP Release 17). In an embodiment, an additional piece of information is added to the SFI to indicate the change of the waveform to either DFT-S-OFDM or CP-OFDM. The GC-DCI carrying the new SFI may use (e.g., have its CRC masked with) a different RNTI to the GC-DCI carrying the legacy SFI, for example. The new SFI provides a time pattern indicating to the UE which waveform to use for which symbol.

Note that the SFI referred to above can either be a new SFI that carries both the 3GPP Release 17 information and the waveform (DFT-S-OFDM vs CP-OFDM) information or a new additional SFI that only carries the waveform (DFT-S-OFDM vs CP-OFDM) information. When a new additional SFI is used, the UE combines the information in the legacy (3GPP Release 17) SFI and the additional SFI to determine whether a given slot is UL or DL from the legacy SFI and determine the waveform from the new additional SFI. The information in the SFI can either apply on a slot-by-slot basis or to all of the slots to which the SFI applies. For example, a single bit in the SFI can indicate whether all UL symbols in a slot (or all UL and FL symbols in a slot) to which the SFI applies should use CP-OFDM or DFT-S-OFDM.

In an embodiment, different UEs are configured to monitor different GC-DCI carrying SFI. For example, cell center UEs may be configured to monitor a legacy GC-DCI in which the waveform is not changed dynamically between DFT-s-OFDM and CP-OFDM. On the other hand, cell edge UEs may be configured to monitor a GC-DCI that carries an SFI allowing for dynamic switching between DFT-s-OFDM and CP-OFDM. The cell centre and cell edge UEs may be differentiated by configuring an RSRP threshold, for example (e.g., so UEs measuring an RSRP below the threshold are deemed to be cell edge UEs and UEs measuring an RSRP greater than or equal to the threshold are deemed to be cell centre UEs).

Activation DCI is used to activate a Type 2 CG-PUSCH or a SPS PDSCH. Once activated, the UE is provided with periodic PUSCH resources in CG-PUSCH or periodic PDSCH resources in SPS PDSCH. In an embodiment, the Activation DCI also indicates the waveform that the UE should use in its UL transmission. That is, the Activation DCI for Type 2 CG-PUSCH indicates the waveform for the activated CG-PUSCH and the Activation DCI for SPS PDSCH indicates the waveform to use for the corresponding PUCCH carrying the HARQ-ACK / NACK for the SPS PDSCH.

In NR, a UE can be configured with multiple DL and UL bandwidth parts (BWP). Up to 4 BWPs can be configured for each DL and UL direction and only one BWP can be activated for each direction at a given time. The activation can be done, for example, via the network scheduling PDCCH indicating a downlink assignment or an uplink grant to a specific BWP, by the *bwp-InactivityTimer,* by RRC signaling or by the MAC (Medium Access Control) entity upon initiation of a Random Access procedure. BWPs are explained in [5], for example.

In an embodiment, a specific BWP can be associated with either a DFT-S-OFDM or CP-OFDM waveform. This means that the symbols and slots in that BWP will be allocated to either the DFT-S-OFDM or CP-OFDM waveform.

In terms of scheduling, the network can assign dynamically (e.g., via DCI) the BWP indicated as "DFT-S-OFDM" for UEs at the cell-edge. However, for the non-cell edge UEs, the network can indicate the UEs to use the BWP indicated as "CP-OFDM". Hence, by assigning UL BWPs to be either (1) DFT-S-OFDM UL BWPs or (2) CP-OFDM UL BWPs, and using the dynamic BWP switching mechanisms of previous 3GPP Releases, dynamic switching between DFT-S-OFDM and CP-OFDM can be effected with minimal specification impact.

In the current specifications, when a UE switches from one BWP to another BWP, there is a stabilization time due to frequency separation and the UE must take into account this time (known as BWP switching time). In an embodiment, two BWPs can be mapped to the same frequency resource, one BWP being used for DFT-S-OFDM and the other being used for CP-OFDM. As the UE does not change the frequency resource when moving from the BWP with CP-OFDM to the BWP with DFT-S-OFDM (or vice versa), there is no need for BWP switching time or the BWP switching time can be reduced. Hence, a faster BWP switching can be achieved (resulting in less latency). Also, although the difference between the two BWPs is the configuration of the waveform, other parameters of the two BWPs may also be different.

### Semi-static Flexible Indication

In semi-static flexible indication, the UE is semi-statically provided (e.g., via RRC signaling) with a predetermined time pattern where the UE is aware which waveform to use on which OFDM symbols without further dynamic signaling. This provides the network with the opportunity to schedule the waveform without the need to provide further dynamic signaling.

In NR, a slot format is an arrangement of OFDM symbols in a slot, where each OFDM symbol (which is sometimes referred to just as a "symbol") can be configured as 'Downlink' (DL), 'Flexible' (F / FL), or 'Uplink' (UL). A UE receives in a DL symbol and transmits in an UL symbol. The FL symbol can be further indicated for use in the DL or UL as needed.

In the current specifications, for the slot format configuration, a table has been defined to contain different combinations of DL, UL and FL symbols in a slot as captured in [5], section 11.1.1. This table is reproduced here as Table 3.

**Table 3**

| **Format** | **Symbol number in a slot** | | | | | | | | | | | | | |
|---|---|---|---|---|---|---|---|---|---|---|---|---|---|---|
| | **0** | **1** | **2** | **3** | **4** | **5** | **6** | **7** | **8** | **9** | **10** | **11** | **12** | **13** |
| 0 | D | D | D | D | D | D | D | D | D | D | D | D | D | D |
| 1 | U | U | U | U | U | U | U | U | U | U | U | U | U | U |
| 2 | F | F | F | F | F | F | F | F | F | F | F | F | F | F |
| 3 | D | D | D | D | D | D | D | D | D | D | D | D | D | F |
| 4 | D | D | D | D | D | D | D | D | D | D | D | D | F | F |
| 5 | D | D | D | D | D | D | D | D | D | D | D | F | F | F |
| 6 | D | D | D | D | D | D | D | D | D | D | F | F | F | F |
| 7 | D | D | D | D | D | D | D | D | D | F | F | F | F | F |
| 8 | F | F | F | F | F | F | F | F | F | F | F | F | F | U |
| 9 | F | F | F | F | F | F | F | F | F | F | F | F | U | U |
| 10 | F | U | U | U | U | U | U | U | U | U | U | U | U | U |
| 11 | F | F | U | U | U | U | U | U | U | U | U | U | U | U |
| 12 | F | F | F | U | U | U | U | U | U | U | U | U | U | U |
| 13 | F | F | F | F | U | U | U | U | U | U | U | U | U | U |
| 14 | F | F | F | F | F | U | U | U | U | U | U | U | U | U |
| 15 | F | F | F | F | F | F | U | U | U | U | U | U | U | U |
| 16 | D | F | F | F | F | F | F | F | F | F | F | F | F | F |
| 17 | D | D | F | F | F | F | F | F | F | F | F | F | F | F |
| 18 | D | D | D | F | F | F | F | F | F | F | F | F | F | F |
| 19 | D | F | F | F | F | F | F | F | F | F | F | F | F | U |
| 20 | D | D | F | F | F | F | F | F | F | F | F | F | F | U |
| 21 | D | D | D | F | F | F | F | F | F | F | F | F | F | U |
| 22 | D | F | F | F | F | F | F | F | F | F | F | F | U | U |
| 23 | D | D | F | F | F | F | F | F | F | F | F | F | U | U |
| 24 | D | D | D | F | F | F | F | F | F | F | F | F | U | U |
| 25 | D | F | F | F | F | F | F | F | F | F | F | U | U | U |
| 26 | D | D | F | F | F | F | F | F | F | F | F | U | U | U |
| 27 | D | D | D | F | F | F | F | F | F | F | F | U | U | U |
| 28 | D | D | D | D | D | D | D | D | D | D | D | D | F | U |
| 29 | D | D | D | D | D | D | D | D | D | D | D | F | F | U |
| 30 | D | D | D | D | D | D | D | D | D | D | F | F | F | U |
| 31 | D | D | D | D | D | D | D | D | D | D | D | F | U | U |
| 32 | D | D | D | D | D | D | D | D | D | D | F | F | U | U |
| 33 | D | D | D | D | D | D | D | D | D | F | F | F | U | U |
| 34 | D | F | U | U | U | U | U | U | U | U | U | U | U | U |
| 35 | D | D | F | U | U | U | U | U | U | U | U | U | U | U |
| 36 | D | D | D | F | U | U | U | U | U | U | U | U | U | U |
| 37 | D | F | F | U | U | U | U | U | U | U | U | U | U | U |
| 38 | D | D | F | F | U | U | U | U | U | U | U | U | U | U |
| 39 | D | D | D | F | F | U | U | U | U | U | U | U | U | U |
| 40 | D | F | F | F | U | U | U | U | U | U | U | U | U | U |
| 41 | D | D | F | F | F | U | U | U | U | U | U | U | U | U |
| 42 | D | D | D | F | F | F | U | U | U | U | U | U | U | U |
| 43 | D | D | D | D | D | D | D | D | D | F | F | F | F | U |
| 44 | D | D | D | D | D | D | F | F | F | F | F | F | U | U |
| 45 | D | D | D | D | D | D | F | F | U | U | U | U | U | U |
| 46 | D | D | D | D | D | F | U | D | D | D | D | D | F | U |
| 47 | D | D | F | U | U | U | U | D | D | F | U | U | U | U |
| 48 | D | F | U | U | U | U | U | D | F | U | U | U | U | U |
| 49 | D | D | D | D | F | F | U | D | D | D | D | F | F | U |
| 50 | D | D | F | F | U | U | U | D | D | F | F | U | U | U |
| 51 | D | F | F | U | U | U | U | D | F | F | U | U | U | U |
| 52 | D | F | F | F | F | F | U | D | F | F | F | F | F | U |
| 53 | D | D | F | F | F | F | U | D | D | F | F | F | F | U |
| 54 | F | F | F | F | F | F | F | D | D | D | D | D | D | D |
| 55 | D | D | F | F | F | U | U | U | D | D | D | D | D | D |
| 56 - 254 | Reserved | | | | | | | | | | | | | |
| 255 | UE determines the slot format for the slot based on *tdd-UL-DL-ConfigurationCommon,* or *tdd-UL-DL-ConfigurationDedicated* and, if any, on detected DCI formats | | | | | | | | | | | | | |

From the above table, the UL symbols can be used for either a DFT-S-OFDM or a CP-OFDM waveform. The waveform is configured semi-statically as described above. However, in order to support waveform switching between DFT-S-OFDM and CP-OFDM, in an embodiment, the above table is updated to include additional information added to each UL symbol of the existing slot formats to indicate whether the symbol can only be used for a DFT-S-OFDM or CP-OFDM waveform.

An example is shown in Table 4 (which, for brevity, is based on a truncated version of Table 3). As can be seen for Slot Format 1 and Slot Format 48, the uplink symbols "U" have been replaced by either *"U_DFT"* or *"U_CP"* to indicate whether each UL symbol should be used for a DFT-S-OFDM or CP-OFDM waveform, respectively.

**Table 4**

| **Format** | **Symbol number in a slot** | | | | | | | | | | | | | |
|---|---|---|---|---|---|---|---|---|---|---|---|---|---|---|
| | **0** | **1** | **2** | **3** | **4** | **5** | **6** | **7** | **8** | **9** | **10** | **11** | **12** | **13** |
| 0 | D | D | D | D | D | D | D | D | D | D | D | D | D | D |
| 1 | U__{CP} | U__{CP} | U__{CP} | U__{CP} | U__{CP} | U__{CP} | U__{CP} | U__{DFT} | U__{DFT} | U__{DFT} | U__{DFT} | U__{DFT} | U__{DFT} | U__{DFT} |
| . | . | . | . | . | . | . | . | . | . | . | . | . | . | . |
| 48 | D | F | U__{CP} | U__{CP} | U__{CP} | U__{CP} | U__{CP} | D | F | U__{DFT} | U__{DFT} | U__{DFT} | U__{DFT} | U__{DFT} |
| . | . | . | . | . | . | . | . | . | . | . | . | . | . | . |
| 56 - 254 | Reserved | | | | | | | | | | | | | |
| 255 | UE determines the slot format for the slot based on *tdd-UL-DL-ConfigurationCommon,* or *tdd-UL-DL-ConfigurationDedicated* and, if any, on detected DCI formats | | | | | | | | | | | | | |

In another embodiment, some of the reserved formats, e.g., Slot Formats 56-254, are used to indicate whether the UE should use DFT-S-OFDM or CP-OFDM. Here, for example, the existing formats, i.e. Slot Formats 0-55, use the RRC configured waveform (as configured per UE) whereas the new entries (in Slot Formats 56-254) use DFT-S-OFDM or CP-OFDM depending on the Format Index and the indication *"U_DFT"* or *"U_CP"* for each UL symbol associated with that Format Index.

The signaling indication of the slot format indicating use of DFT-S-OFDM or CP-OFDM for each UL symbol can be configured semi-statically by, for example, reusing the existing *tdd-UL-DL-ConfigurationCommon* or *tdd-UL-DL-ConfigurationDedicated* from higher layers.

Furthermore, the FL symbols, when used for UL, may use either waveform and the network may provide signaling to indicate whether such FL symbols are to use DFT-S-OFDM or CP-OFDM for UL transmission. For example, the scheduling DCI may be used to indicate that the FL symbol(s) are to be changed to UL symbols and to additionally indicate the waveform to be employed for performing the UL transmission. In another example, the existing GC-DCI carrying the Slot Format Indicator (SFI) may be used to indicate dynamically that the FL symbol(s) have been changed to UL symbol(s) and to additionally indicate the waveform to be employed for performing the UL transmission Based on the above signaling configurations for the UEs in the cell, the network can, for example, dynamically schedule symbols labelled *"U_DFT"* (corresponding to the DFT-S-OFDM waveform) for UEs at the cell-edge and dynamically schedule symbols labelled *"U_CP"* (corresponding to the CP-OFDM waveform) for non-cell edge UEs.

Thus, as described, the FL symbol(s) associated with an SFI indicated by GC-DCI can be changed to UL symbol(s) and the use of DFT-S-OFDM or CP-OFDM for uplink transmission can be specified. In embodiments, a semi-static slot format configuration is maintained (so each symbol is semi-statically configured as DL, UL or FL). However, new SFI configurations or a new DCI are used to change the UL and FL symbols to UL using CP-OFDM or DFT-S-OFDM. The GC-DCI carrying a new SFI may use (e.g., have its CRC masked with) a different RNTI to the GC-DCI carrying legacy SFI.

In an embodiment, the granularity of waveform indication may be larger than the symbol level. For example, all UL symbols in a slot can be allocated to either DFT-S-OFDM or CP-OFDM by the network. As exemplified in Table 5, all uplink symbols with "U" in Slot Format 1 have been allocated to *"U_CP"* (indicating CP-OFDM should be used for all UL symbols in the slot) and all uplink symbols with "U" in Slot Format 48 have been allocated to *"U_DFT"* (indicating DFT-S-OFDM should be used for all UL symbols in the slot).

**Table 5**

| **Format** | **Symbol number in a slot** | | | | | | | | | | | | | |
|---|---|---|---|---|---|---|---|---|---|---|---|---|---|---|
| | **0** | **1** | **2** | **3** | **4** | **5** | **6** | **7** | **8** | **9** | **10** | **11** | **12** | **13** |
| 0 | D | D | D | D | D | D | D | D | D | D | D | D | D | D |
| 1 | U__{CP} | U__{CP} | U__{CP} | U__{CP} | U__{CP} | U__{CP} | U__{CP} | U__{CP} | U__{CP} | U__{CP} | U__{CP} | U__{CP} | U__{CP} | U__{CP} |
| . | . | . | . | . | . | . | . | . | . | . | . | . | . | . |
| 48 | D | F | U__{DFT} | U__{DFT} | U__{DFT} | U__{DFT} | U__{DFT} | D | F | U__{DFT} | U__{DFT} | U__{DFT} | U__{DFT} | U__{DFT} |
| . | . | . | . | . | . | . | . | . | . | . | . | . | . | . |
| 56 - 254 | Reserved | | | | | | | | | | | | | |
| 255 | UE determines the slot format for the slot based on *tdd-UL-DL-ConfigurationCommon,* or *tdd-UL-DL-ConfigurationDedicated* and, if any, on detected DCI formats | | | | | | | | | | | | | |

In another example, the signaling is indicated slot by slot (rather than symbol by symbol, as in Table 5) in one or more radio frames. This is exemplified in Table 6. In this table, an additional column is added to show whether DFT-S-OFDM or CP-OFDM should be applied to the UL symbols in each slot. This provides another way of indicating that CP-OFDM should be used for all UL symbols in a slot with Slot Format 1 and that DFT-S-OFDM should be used for all UL symbols in a slot with Slot Format 48, for example.

**Table 6**

| **Format** | **Waveform** | **Symbol number in a slot** | | | | | | | | | | | | | |
|---|---|---|---|---|---|---|---|---|---|---|---|---|---|---|---|
| | | **0** | **1** | **2** | **3** | **4** | **5** | **6** | **7** | **8** | **9** | **10** | **11** | **12** | **13** |
| 0 | | D | D | D | D | D | D | D | D | D | D | D | D | D | D |
| 1 | ^{CP-OFDM} | U | U | U | U | U | U | U | U | U | U | U | U | U | U |
| . | . | . | . | . | . | . | . | . | . | . | . | . | . | . | . |
| 48 | ^{DFT-S-OFDM} | D | F | U | U | U | U | U | D | F | U | U | U | U | U |
| . | . | . | . | . | . | . | . | . | . | . | . | . | . | . | . |
| 56 - 254 | | Reserved | | | | | | | | | | | | | |
| 255 | | UE determines the slot format for the slot based on *tdd-UL-DL-ConfigurationCommon,* or *tdd-UL-DL-ConfigurationDedicated* and, if any, on detected DCI formats | | | | | | | | | | | | | |

In an embodiment, in terms of scheduling, the network may dynamically assign the slot formats labelled "DFT-S-OFDM" to UEs at the cell edge and dynamically assign the slot formats labelled "CP-OFDM" to non-cell edge UEs (again, with each UE being determined as cell edge or non-cell edge based on UE RSRP measurements and an RSRP threshold, for example). In an embodiment, the network may schedule both cell edge UEs and non-cell edge UEs with DFT-S-OFDM. This helps provide improved coverage for both UE types if, for example, both UE types have urgent data.

While the examples of Tables 4 to 6 have shown reassignment of existing Slot Format Indicators (i.e. SFI = 0 - 55) to include mixtures of CP-OFDM and DFT-S-OFDM UL waveforms, new rows in the SFI table (i.e. SFI = 56 - 254) may be used. For example, according to the set of slot formats indicated in Table 7, if the UE is signaled to use SFI = 1, it transmits in the UL using CP-OFDM whereas, if the UE is signaled to use SFI = 56, it transmits in the UL using DFT-S-OFDM. This enables different slot formats (with distinct SFls) with an identical configuration of DL, UL and FL symbols but which are distinguished by the use of either CP-OFDM or DFT-S-OFDM.

**Table 7**

| **Format** | **Symbol number in a slot** | | | | | | | | | | | | | |
|---|---|---|---|---|---|---|---|---|---|---|---|---|---|---|
| | **0** | **1** | **2** | **3** | **4** | **5** | **6** | **7** | **8** | **9** | **10** | **11** | **12** | **13** |
| 0 | D | D | D | D | D | D | D | D | D | D | D | D | D | D |
| 1 (CP) | U | U | U | U | U | U | U | U | U | U | U | U | U | U |
| | | | | | | | | | | | | | | |
| | | | | | | | | | | | | | | |
| | | | | | | | | | | | | | | |
| 56 (DFT) | U | U | U | U | U | U | U | U | U | U | U | U | U | U |

In an embodiment, the UE may be signaled an SFI that contains some symbols that are configured for CP-OFDM and other symbols that are configured for DFT-S-OFDM. The UE therefore has various options regarding which of the CP-OFDM and DFT-S-OFDM symbols to use for UL transmission in the slot.

In an example, RRC signaling indicates whether the UE should transmit using the symbols indicated as DFT-S-OFDM by the SFI or using the symbols indicated as CP-OFDM by the SFI. This may be useful, for example, for CG-PUSCH transmission or for PUSCH transmission scheduled by a compact DCI which does not specify the symbols at which the PUSCH allocation starts and stops but, rather, only gives a slot-based allocation (with the slot having some DFT-S-OFDM symbols and some CP-OFDM symbols indicated by the SFI).

In an example, if the RRC has signaled *transformPrecoder* in *pusch-Config* as being enabled, the UE transmits using the symbols indicated as DFT-S-OFDM by the SFI. Otherwise, the UE transmits using the symbols indicated as CP-OFDM by the SFI.

In an example, the UE transmits using DFT-S-OFDM in the symbols indicated as DFT-S-OFDM by the SFI and transmits using CP-OFDM in the symbols indicated as CP-OFDM by the SFI.

For instance, a single transport block may be transmitted wherein the transport block is mapped to both DFT-S-OFDM symbols and CP-OFDM symbols. Multiplexing the transport block in this way interleaves the transport block across the two symbol types. This helps provide diversity in case one of {DFT-S-OFDM, CP-OFDM} is more robust than the other (e.g. DFT-S-OFDM symbols may be more robust if they can be transmitted at a higher power or if they are transmitted as single layer transmissions).

Alternatively, separate transport blocks may be sent in each set of symbols. That is, one transport block is transmitted in the set of DFT-S-OFDM symbols and another transport block is transmitted in the set of CP-OFDM symbols.

In an example, the UE chooses whether CP-OFDM or DFT-S-OFDM is more appropriate (e.g. likely to be more reliable) and transmits in the appropriate CP-OFDM or DFT-S-OFDM symbols of the slot. For example, the UE may determine whether it is located at the cell edge or cell centre (again, by measuring an RSRP and comparing it to a threshold, for example) and determine whether DFT-S-OFDM or CP-OFDM is the most appropriate waveform based on this. Again, this may be useful, for example, for CG-PUSCH transmission or for PUSCH transmission scheduled by a compact DCI.

In an example, the DCI indicates which of the symbols are to be used by the UE for PUSCH transmission. For example, the network may use the Start and Length Indicator Value (SLIV) fields within the TDRA of the DCI to allocate certain symbols to the UE. The UE then transmits in those symbols using DFT-S-OFDM or CP-OFDM as appropriate, e.g. based on information in a slot format indicator, SFI, as previously described. The network (e.g., the gNB) may, for example, signal a SLIV that indicates only DFT-S-OFDM symbols or only CP-OFDM symbols. The network (e.g., the gNB) may also not signal a SLIV that indicates a combination of DFT-S-OFDM and CP-OFDM symbols, as this combination of different symbol types would lead to an inconsistency at the UE.

In an example, the UL transmission maintains use of the waveform associated with the 1^{st} symbol of the UL transmission. For example, a slot with 14 OFDM symbols may be configured such that symbols 0 to 7 are CP-OFDM and symbols 8 to 13 are DFT-S-OFDM. If a PUSCH, PUSCH#1, is scheduled to start at symbol 6 and end at symbol 13, then PUSCH#1 will use CP-OFDM throughout (even for symbols 8 to 13) since the 1^{st} symbol of PUSCH#1 is symbol 6 which is CP-OFDM.

### Multiple combined waveform signaling

In an embodiment, the UE is provided with one or more different types of waveform indications. For example, the UE may be configured with an explicit DCI indication and also a semi-static flexible configuration. The UE may therefore execute the following rules, for example:
- A symbol with a semi-static configured waveform cannot be changed by a dynamic indicator (that is, an indicator associated with a specific scheduled UL transmission, e.g., an explicit or implicit DCI indicator) or a semi-persistent indicator. Thus, only OFDM symbols without a semi-static configured waveform, such as an UL symbol without any such indicated waveform or a FL symbol, can be overwritten by a dynamic or semi-persistent configured waveform.
- A symbol with a semi-persistent configured waveform cannot be changed by a dynamic indicator. Thus, only OFDM symbols without a semi-persistent configured waveform can be overwritten by a dynamic configured waveform.

That is, a dynamic indicator can configure the waveform of any symbol except those with a semi-static or semi-persistent waveform configuration. A semi-persistent indicator can configure the waveform of any symbol except those with a semi-static waveform configuration.

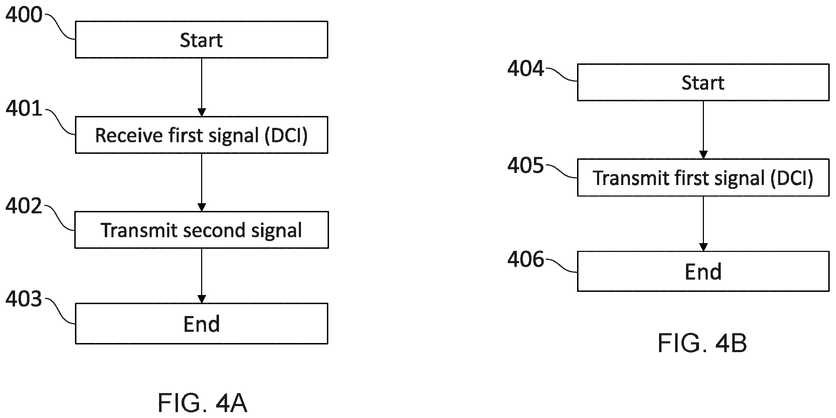

Figs. 4A and 4B show corresponding methods according to an embodiment.

Fig. 4A shows a method carried out by a wireless telecommunications apparatus (e.g. UE 14) according to an embodiment.

The method starts at step 400.

At step 401, control circuitry (e.g. controller 44) controls communication circuitry (e.g. transmitter 49 and/or receiver 48) to receive a first wireless signal. The first wireless signal is comprised in DCI (e.g. scheduling DCI, activation DCI or GC-DCI) and indicates a waveform (e.g. CP-OFDM or DFT-S-OFDM) to be used by the wireless telecommunications apparatus when transmitting a second wireless signal (e.g. in PUSCH or PUCCH).

At step 402, the control circuitry controls the communication circuitry to transmit the second wireless signal using the indicated waveform.

The method ends at step 403.

Fig. 4B shows a method carried out by a wireless telecommunications apparatus (e.g. TRP 10, such as a gNB) according to an embodiment.

The method starts at step 404.

At step 405, control circuitry (e.g. controller 34) controls communication circuitry (e.g. transmitter 30 and/or receiver 32) to transmit a first wireless signal to a second wireless telecommunications apparatus (e.g. UE 14). The first wireless signal is comprised in DCI (e.g. scheduling DCI, activation DCI or GC-DCI) and indicates a waveform (e.g. CP-OFDM or DFT-S-OFDM) to be used by the second wireless telecommunications apparatus when transmitting a second wireless signal (e.g. in PUSCH or PUCCH).

The method ends at step 406.

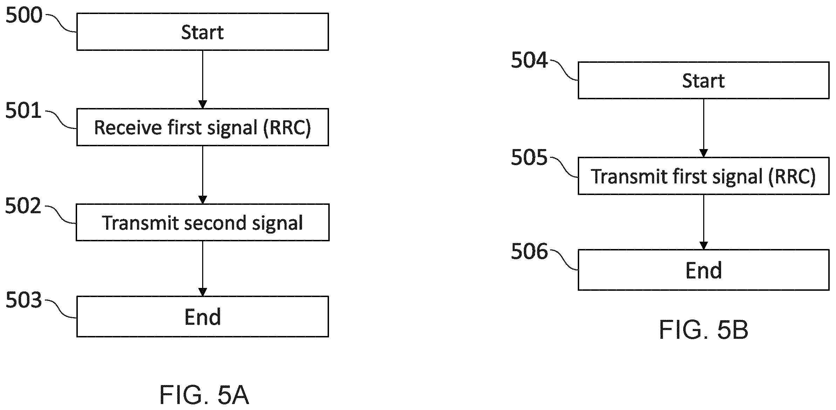

Figs. 5A and 5B show corresponding methods according to an embodiment.

Fig. 5A shows a method carried out by a wireless telecommunications apparatus (e.g. UE 14) according to an embodiment.

The method starts at step 500.

At step 501, control circuitry (e.g. controller 44) controls communication circuitry (e.g. transmitter 49 and/or receiver 48) to receive a first wireless signal. The first wireless signal is comprised in RRC signalling and indicates a waveform (e.g. CP-OFDM or DFT-S-OFDM) to be used by the wireless telecommunications apparatus when transmitting a second wireless signal (e.g. in PUSCH or PUCCH). The indicated waveform is indicated based on a SFI (e.g. an SFI indicating one of the rows of one of Tables 4 to 7) carried by the RRC signalling.

At step 502, the control circuitry controls the communication circuitry to transmit the second wireless signal in a slot formatted according to the SFI using the indicated waveform.

The method ends at step 503.

Fig. 5B shows a method carried out by a wireless telecommunications apparatus (e.g. TRP 10, such as a gNB) according to an embodiment.

The method starts at step 504.

At step 505, control circuitry (e.g. controller 34) controls communication circuitry (e.g. transmitter 30 and/or receiver 32) to transmit a first wireless signal to a second wireless telecommunications apparatus (e.g. UE 14). The first wireless signal is comprised in RRC signalling and indicates a waveform (e.g. CP-OFDM or DFT-S-OFDM) to be used by the second wireless telecommunications apparatus when transmitting a second wireless signal (e.g. in PUSCH or PUCCH). The indicated waveform is indicated based on an SFI (e.g. an SFI indicating one of the rows of one of Tables 4 to 7) carried by the RRC signalling.

The method ends at step 506.

The present technique thus provides a number of improved ways in which the waveform type (e.g. CP-OFDM or DFT-S-OFDM) for uplink transmission can be adjusted dynamically and/or flexibly.

Numerous modifications and variations of the present disclosure are possible in light of the above teachings. It is therefore to be understood that, within the scope of the claims, the disclosure may be practiced otherwise than as specifically described herein.

In so far as embodiments of the disclosure have been described as being implemented, at least in part, by one or more software-controlled information processing apparatuses, it will be appreciated that a machine-readable medium (in particular, a non-transitory machine-readable medium) carrying such software, such as an optical disk, a magnetic disk, semiconductor memory or the like, is also considered to represent an embodiment of the present disclosure. In particular, the present disclosure should be understood to include a non-transitory storage medium comprising code components which cause a computer to perform any of the disclosed method(s).

It will be appreciated that the above description for clarity has described embodiments with reference to different functional units, circuitry and/or processors. However, it will be apparent that any suitable distribution of functionality between different functional units, circuitry and/or processors may be used without detracting from the embodiments.

Described embodiments may be implemented in any suitable form including hardware, software, firmware or any combination of these. Described embodiments may optionally be implemented at least partly as computer software running on one or more computer processors (e.g. data processors and/or digital signal processors). The elements and components of any embodiment may be physically, functionally and logically implemented in any suitable way. Indeed, the functionality may be implemented in a single unit, in a plurality of units or as part of other functional units. As such, the disclosed embodiments may be implemented in a single unit or may be physically and functionally distributed between different units, circuitry and/or processors.

Although the present disclosure has been described in connection with some embodiments, it is not intended to be limited to these embodiments. Additionally, although a feature may appear to be described in connection with particular embodiments, one skilled in the art would recognize that various features of the described embodiments may be combined in any manner suitable to implement the present disclosure.

### REFERENCES

[1] Holma H. and Toskala A, "LTE for UMTS OFDMA and SC-FDMA based radio access", John Wiley and Sons, 2009.
[2] 3GPP TS 38.214 V15 (Release 15)
[3] RP-213579, "New WI: Further NR coverage enhancements", 3GPP TSG RAN Meeting #94e, 6-17 December 2021
[4] RWS-210307, "Discussion on Release 18 MIMO enhancements", Ericsson, 3GPP TSG-RAN Rel-18 workshop, 28 June - 2 July 2021
[5] 3GPP TS 38.213 V17 (Release 17)

## Claims

1. A wireless telecommunications apparatus (14) for use in a wireless telecommunications network, the wireless telecommunications apparatus comprising:
communication circuitry (48, 49) configured to transmit or receive wireless signals; and
control circuitry (44) configured to:
control the communication circuitry to receive a first wireless signal, the first wireless signal being comprised in Radio Resource Control, RRC, signalling and indicating a waveform to be used by the wireless telecommunications apparatus when transmitting a second wireless signal, the indicated waveform being indicated based on a Slot Format Indicator, SFI, carried by the RRC signalling; and
control the communication circuitry to transmit the second wireless signal in a slot formatted according to the SFI using the indicated waveform;
wherein the indicated waveform is indicated on a symbol-by-symbol basis; and
wherein the indicated waveform is either a Cyclic Prefix - Orthogonal Frequency Division Multiplexing, CP-OFDM, waveform or a Discrete Fourier Transform - spread - Orthogonal Frequency Division Multiplexing, DFT-S-OFDM, waveform.

2. A wireless telecommunications apparatus according to claim 1, wherein a slot format indicated by the SFI comprises one or more flexible symbols updatable to uplink symbols for use with the indicated waveform.

3. A wireless telecommunications apparatus according to claim 2, wherein the flexible symbols of the slot format indicated by the SFI are updatable based on scheduling Downlink Control Information, DCI.

4. A wireless telecommunications apparatus according to claim 2, wherein the flexible symbols of the slot format indicated by the SFI are updatable based on Group Common Downlink Control Information, GC-DCI.

5. A wireless telecommunications apparatus according to claim 4, wherein the GC-DCI carries a new SFI indicating a new slot format, the new slot format indicated by the new SFI being the slot format indicated by the SFI carried by the RRC signalling with the one or more flexible symbols updated to uplink symbols for use with the indicated waveform.

6. A wireless telecommunications apparatus according to claim 5, wherein:
the GC-DCI carrying the new SFI is indicated by a first type of GC-DCI, the first type of GC-DCI having a characteristic distinguishing it from a second type of GC-DCI which does not indicate the new SFI.

7. A wireless telecommunications apparatus according to claim 6, wherein the characteristic distinguishing the first type of GC-DCI and the second type of GC-DCI is a Radio Network Temporary Identifier, RNTI, used to mask the GC-DCI.

8. A wireless telecommunications apparatus according to claim 1, wherein a first uplink symbol of the formatted slot is for use with a first indicated waveform and a second uplink symbol of the formatted slot is for use with a second waveform.

9. A wireless telecommunications apparatus according to claim 8, wherein the second wireless signal is transmitted using the first uplink symbol or the second uplink symbol based on RRC signalling received by the communication circuitry.

10. A wireless telecommunications apparatus according to claim 8, wherein the second wireless signal transmits a transport block mapped to both the first and second uplink symbols.

11. A wireless telecommunications apparatus according to claim 8, wherein the second wireless signal transmits a transport block mapped to only one of the first and second uplink symbols.

12. A wireless telecommunications apparatus according to claim 8, wherein the second wireless signal is transmitted using the first uplink symbol or the second uplink symbol based on a location of the wireless telecommunications apparatus.

13. A wireless telecommunications apparatus (10) for use in a wireless telecommunications network, the wireless telecommunications apparatus comprising:
communication circuitry (32, 34) configured to transmit or receive wireless signals; and
control circuitry (34) configured to:
control the communication circuitry to transmit a first wireless signal to a second wireless telecommunications apparatus, the first wireless signal being comprised in Radio Resource Control, RRC, signalling and indicating a waveform to be used by the second wireless telecommunications apparatus when transmitting a second wireless signal, the indicated waveform being indicated based on a Slot Format Indicator, SFI, carried by the RRC signalling;
wherein the indicated waveform is indicated on a symbol-by-symbol basis; and
wherein the indicated waveform is either a Cyclic Prefix - Orthogonal Frequency Division Multiplexing, CP-OFDM, waveform or a Discrete Fourier Transform - spread - Orthogonal Frequency Division Multiplexing, DFT-S-OFDM, waveform.

14. A method of controlling a wireless telecommunications apparatus for use in a wireless telecommunications network, the method comprising controlling the wireless telecommunications apparatus to:
receive (501)a first wireless signal, the first wireless signal being comprised in Radio Resource Control, RRC, signalling and indicating a waveform to be used by the wireless telecommunications apparatus when transmitting a second wireless signal, the indicated waveform being indicated based on a Slot Format Indicator, SFI, carried by the RRC signalling; and
transmit (502) the second wireless signal in a slot formatted according to the SFI using the indicated waveform;
wherein the indicated waveform is indicated on a symbol-by-symbol basis; and
wherein the indicated waveform is either a Cyclic Prefix - Orthogonal Frequency Division Multiplexing, CP-OFDM, waveform or a Discrete Fourier Transform - spread - Orthogonal Frequency Division Multiplexing, DFT-S-OFDM, waveform.

15. A method of controlling a wireless telecommunications apparatus for use in a wireless telecommunications network, the method comprising controlling the wireless telecommunications apparatus to:
transmit (505) a first wireless signal to a second wireless telecommunications apparatus, the first wireless signal being comprised in Radio Resource Control, RRC, signalling and indicating a waveform to be used by the second wireless telecommunications apparatus when transmitting a second wireless signal, the indicated waveform being indicated based on a Slot Format Indicator, SFI, carried by the RRC signalling;
wherein the indicated waveform is indicated on a symbol-by-symbol basis; and
wherein the indicated waveform is either a Cyclic Prefix - Orthogonal Frequency Division Multiplexing, CP-OFDM, waveform or a Discrete Fourier Transform - spread - Orthogonal Frequency Division Multiplexing, DFT-S-OFDM, waveform.

## Patentansprüche

1. Drahtlose Telekommunikationseinrichtung (14) zur Verwendung in einem drahtlosen Telekommunikationsnetzwerk, die drahtlose Telekommunikationseinrichtung umfassend:
eine Kommunikationsschaltung (48, 49), die konfiguriert ist, um drahtlose Signale zu senden oder zu empfangen; und
eine Steuerschaltung (44), die konfiguriert ist zum:
Steuern der Kommunikationsschaltung, um ein erstes drahtloses Signal zu empfangen, wobei das erste drahtlose Signal in einer Funkressourcensteuerungssignalisierung, RRC-Signalisierung, enthalten ist und eine Wellenform angibt, die durch die drahtlose Telekommunikationseinrichtung beim Senden eines zweiten drahtlosen Signals zu verwenden ist, wobei die angegebene Wellenform basierend auf einem Slot-Formatindikator, SFI, angegeben wird, der durch die RRC-Signalisierung übertragen wird; und
Steuern der Kommunikationsschaltung, um das zweite drahtlose Signal in einem Slot, der gemäß dem SFI formatiert ist, unter Verwendung der angegebenen Wellenform zu senden;
wobei die angegebene Wellenform Symbol für Symbol angegeben wird; und
wobei die angegebene Wellenform entweder eine Wellenform des orthogonalen Frequenzmultiplexen mit zyklischem Präfix, CP-OFDM-Wellenform, oder eine Wellenform des orthogonalen Frequenzmultiplexen mit gespreizter diskreter Fouriertransformation, DFT-S-OFDM-Wellenform, ist.

2. Drahtlose Telekommunikationseinrichtung nach Anspruch 1, wobei ein Slot-Format, das durch den SFI angegeben wird, ein oder mehrere flexible Symbole umfasst, die auf Uplink-Symbole zur Verwendung mit der angegebenen Wellenform aktualisierbar sind.

3. Drahtlose Telekommunikationseinrichtung nach Anspruch 2, wobei die flexiblen Symbole des Slot-Formats, das durch den SFI angegeben wird, basierend auf Planungs-Downlink-Steuerinformationen, DCI, aktualisierbar sind.

4. Drahtlose Telekommunikationseinrichtung nach Anspruch 2, wobei die flexiblen Symbole des Slot-Formats, das durch den SFI angegeben wird, basierend auf gemeinsamen Gruppen-Downlink-Steuerinformationen, GC-DCI, aktualisierbar sind.

5. Drahtlose Telekommunikationseinrichtung nach Anspruch 4, wobei die GC-DCI einen neuen SFI übertragen, der ein neues Slot-Format angibt, wobei das neue Slot-Format, das durch den neuen SFI angegeben wird, das Slot-Format ist, das durch den SFI angegeben wird, der durch die RRC-Signalisierung mit dem einen oder den mehreren flexiblen Symbolen, die auf Uplink-Symbole zur Verwendung mit der angegebenen Wellenform aktualisiert sind, übertragen wird.

6. Drahtlose Telekommunikationseinrichtung nach Anspruch 5, wobei:
die neuen GC-DCI, die den SFI übertragen, durch einen ersten Typ von GC-DCI angegeben werden, wobei der erste Typ von GC-DCI eine Eigenschaft aufweist, durch die er sich von einem zweiten Typ von GC-DCI unterscheidet, der den neuen SFI nicht angibt.

7. Drahtlose Telekommunikationseinrichtung nach Anspruch 6, wobei die Eigenschaft, die den ersten Typ von GC-DCI und den zweiten Typ von GC-DCI unterscheidet, ein temporärer Funknetzidentifikator, RNTI, ist, der verwendet wird, um die GC-DCI zu maskieren.

8. Drahtlose Telekommunikationseinrichtung nach Anspruch 1, wobei ein erstes Uplink-Symbol des formatierten Slots zur Verwendung mit einer ersten angegebenen Wellenform dient und ein zweites Uplink-Symbol des formatierten Slots zur Verwendung mit einer zweiten Wellenform dient.

9. Drahtlose Telekommunikationseinrichtung nach Anspruch 8, wobei das zweite drahtlose Signal unter Verwendung des ersten Uplink-Symbols oder des zweiten Uplink-Symbols basierend auf einer RRC-Signalisierung gesendet wird, die durch die Kommunikationsschaltung empfangen wird.

10. Drahtlose Telekommunikationseinrichtung nach Anspruch 8, wobei das zweite drahtlose Signal einen Transportblock sendet, der sowohl auf das erste als auch auf das zweite Uplink-Symbol abgebildet ist.

11. Drahtlose Telekommunikationseinrichtung nach Anspruch 8, wobei das zweite drahtlose Signal einen Transportblock sendet, der auf nur eines des ersten und des zweiten Uplink-Symbols abgebildet ist.

12. Drahtlose Telekommunikationseinrichtung nach Anspruch 8, wobei das zweite drahtlose Signal unter Verwendung des ersten Uplink-Symbols oder des zweiten Uplink-Symbols basierend auf einem Standort der drahtlosen Telekommunikationseinrichtung gesendet wird.

13. Drahtlose Telekommunikationseinrichtung (10) zur Verwendung in einem drahtlosen Telekommunikationsnetzwerk, die drahtlose Telekommunikationseinrichtung umfassend:
eine Kommunikationsschaltung (32, 34), die konfiguriert ist, um drahtlose Signale zu senden oder zu empfangen; und
eine Steuerschaltung (34), die konfiguriert ist zum:
Steuern der Kommunikationsschaltung, um ein erstes drahtloses Signal an eine zweite Telekommunikationseinrichtung zu senden, wobei das erste drahtlose Signal in einer Funkressourcensteuerungssignalisierung, RRC-Signalisierung, enthalten ist und eine Wellenform angibt, die durch die drahtlose Telekommunikationseinrichtung beim Senden eines zweiten drahtlosen Signals zu verwenden ist, wobei die angegebene Wellenform basierend auf einem Slot-Formatindikator, SFI, angegeben wird, der durch die RRC-Signalisierung übertragen wird;
wobei die angegebene Wellenform Symbol für Symbol angegeben wird; und
wobei die angegebene Wellenform entweder eine Wellenform des orthogonalen Frequenzmultiplexen mit zyklischem Präfix, CP-OFDM-Wellenform, oder eine Wellenform des orthogonalen Frequenzmultiplexen mit gespreizter diskreter Fouriertransformation, DFT-S-OFDM-Wellenform, ist.

14. Verfahren zum Steuern einer drahtlosen Telekommunikationseinrichtung zur Verwendung in einem drahtlosen Telekommunikationsnetzwerk, das Verfahren umfassend das Steuern der drahtlosen Telekommunikationseinrichtung zum:
Empfangen (501) eines ersten drahtlosen Signals, wobei das erste drahtlose Signal in einer Funkressourcensteuerungssignalisierung, RRC-Signalisierung, enthalten ist und eine Wellenform angibt, die durch die drahtlose Telekommunikationseinrichtung beim Senden eines zweiten drahtlosen Signals zu verwenden ist, wobei die angegebene Wellenform basierend auf einem Slot-Formatindikator, SFI, angegeben wird, der durch die RRC-Signalisierung übertragen wird; und
Senden (502) des zweiten drahtlosen Signals in einem Slot, der gemäß dem SFI formatiert ist, unter Verwendung der angegebenen Wellenform;
wobei die angegebene Wellenform Symbol für Symbol angegeben wird; und
wobei die angegebene Wellenform entweder eine Wellenform des orthogonalen Frequenzmultiplexen mit zyklischem Präfix, CP-OFDM-Wellenform, oder eine Wellenform des orthogonalen Frequenzmultiplexen mit gespreizter diskreter Fouriertransformation, DFT-S-OFDM-Wellenform, ist.

15. Verfahren zum Steuern einer drahtlosen Telekommunikationseinrichtung zur Verwendung in einem drahtlosen Telekommunikationsnetzwerk, das Verfahren umfassend das Steuern der drahtlosen Telekommunikationseinrichtung zum:
Senden (505) eines ersten drahtlosen Signals an eine zweite drahtlose Telekommunikationseinrichtung, wobei das erste drahtlose Signal in einer Funkressourcensteuerungssignalisierung, RRC-Signalisierung, enthalten ist und eine Wellenform angibt, die durch die zweite drahtlose Telekommunikationseinrichtung beim Senden eines zweiten drahtlosen Signals zu verwenden ist, wobei die angegebene Wellenform basierend auf einem Slot-Formatindikator, SFI, angegeben wird, der durch die RRC-Signalisierung übertragen wird;
wobei die angegebene Wellenform Symbol für Symbol angegeben wird; und
wobei die angegebene Wellenform entweder eine Wellenform des orthogonalen Frequenzmultiplexen mit zyklischem Präfix, CP-OFDM-Wellenform, oder eine Wellenform des orthogonalen Frequenzmultiplexen mit gespreizter diskreter Fouriertransformation, DFT-S-OFDM-Wellenform, ist.

## Revendications

1. Appareil de télécommunications sans fil (14) pour utilisation dans un réseau de télécommunications sans fil, l'appareil de télécommunication sans fil comprenant :
un système de circuits de communication (48, 49) configuré pour transmettre ou recevoir des signaux sans fil ; et
un système de circuits de commande (44) configuré pour :
commander le système de circuits de communication pour recevoir un premier signal sans fil, le premier signal sans fil étant compris dans une signalisation de commande de ressource radio, RRC et indiquant une forme d'onde à utiliser par l'appareil de télécommunication sans fil lors de la transmission d'un second signal sans fil, la forme d'onde indiquée étant indiquée en fonction d'un indicateur de format de créneau, SFI, transporté par la signalisation RRC ; et
commander le système de circuits de communication pour transmettre le second signal sans fil dans un créneau formaté selon le SFI à l'aide de la forme d'onde indiquée ;
dans lequel la forme d'onde indiquée est indiquée sur une base de symbole par symbole ; et
dans lequel la forme d'onde indiquée est soit une forme d'onde de préfixe cyclique - multiplexage par répartition orthogonale de la fréquence, CP-OFDM, soit une forme d'onde de transformée de Fourier discrète - étalement - multiplexage par répartition orthogonale de la fréquence, DFT-S-OFDM.

2. Appareil de télécommunications sans fil selon la revendication 1, dans lequel un format de créneau indiqué par le SFI comprend un ou plusieurs symboles flexibles pouvant être mis à jour en symboles de liaison montante pour utilisation avec la forme d'onde indiquée.

3. Appareil de télécommunications sans fil selon la revendication 2, dans lequel les symboles flexibles du format de créneau indiqué par le SFI peuvent être mis à jour en fonction de la planification d'informations de commande de liaison descendante, DCI.

4. Appareil de télécommunications sans fil selon la revendication 2, dans lequel les symboles flexibles du format de créneau indiqué par le SFI peuvent être mis à jour en fonction d'informations de commande de liaison descendante communes de groupe, GC-DCI.

5. Appareil de télécommunications sans fil selon la revendication 4, dans lequel les GC-DCI transportent un nouveau SFI indiquant un nouveau format de créneau, le nouveau format de créneau indiqué par le nouveau SFI étant le format de créneau indiqué par le SFI transporté par la signalisation RRC avec le ou les symboles flexibles mis à jour en symboles de liaison montante pour utilisation avec la forme d'onde indiquée.

6. Appareil de télécommunications sans fil selon la revendication 5, dans lequel :
les GC-DCI transportant le nouveau SFI sont indiquées par un premier type de GC-DCI, le premier type de GC-DCI ayant une caractéristique le distinguant d'un second type de GC-DCI qui n'indique pas le nouveau SFI.

7. Appareil de télécommunications sans fil selon la revendication 6, dans lequel la caractéristique distinguant le premier type de GC-DCI et le second type de GC-DCI est un identificateur temporaire de réseau radio, RNTI, utilisé pour masquer les GC-DCI.

8. Appareil de télécommunications sans fil selon la revendication 1, dans lequel un premier symbole de liaison montante du créneau formaté est destiné à être utilisé avec une première forme d'onde indiquée et un second symbole de liaison montante du créneau formaté est destiné à être utilisé avec une seconde forme d'onde.

9. Appareil de télécommunications sans fil selon la revendication 8, dans lequel le second signal sans fil est transmis à l'aide du premier symbole de liaison montante ou du second symbole de liaison montante en fonction d'une signalisation RRC reçue par le système de circuits de communication.

10. Appareil de télécommunications sans fil selon la revendication 8, dans lequel le second signal sans fil transmet un bloc de transport mappé à la fois aux premier et second symboles de liaison montante.

11. Appareil de télécommunications sans fil selon la revendication 8, dans lequel le second signal sans fil transmet un bloc de transport mappé à un seul des premier et second symboles de liaison montante.

12. Appareil de télécommunications sans fil selon la revendication 8, dans lequel le second signal sans fil est transmis à l'aide du premier symbole de liaison montante ou du second symbole de liaison montante en fonction d'une localisation de l'appareil de télécommunications sans fil.

13. Appareil de télécommunications sans fil (10) pour utilisation dans un réseau de télécommunications sans fil, l'appareil de télécommunication sans fil comprenant :
un système de circuits de communication (32, 34) configuré pour transmettre ou recevoir des signaux sans fil ; et
un système de circuits de commande (34) configuré pour :
commander le système de circuits de communication pour transmettre un premier signal sans fil à un second appareil de télécommunications sans fil, le premier signal sans fil étant compris dans une signalisation de commande de ressource radio, RRC et indiquant une forme d'onde à utiliser par le second appareil de télécommunications sans fil lors de la transmission d'un second signal sans fil, la forme d'onde indiquée étant indiquée en fonction d'un indicateur de format de créneau, SFI, transporté par la signalisation RRC ;
dans lequel la forme d'onde indiquée est indiquée sur une base de symbole par symbole ; et
dans lequel la forme d'onde indiquée est soit une forme d'onde de préfixe cyclique - multiplexage par répartition orthogonale de la fréquence, CP-OFDM, soit une forme d'onde de transformée de Fourier discrète - étalement - multiplexage par répartition orthogonale de la fréquence, DFT-S-OFDM.

14. Procédé de commande d'un appareil de télécommunications sans fil pour utilisation dans un réseau de télécommunications sans fil, le procédé comprenant la commande de l'appareil de télécommunications sans fil pour :
recevoir (501) un premier signal sans fil, le premier signal sans fil étant compris dans une signalisation de commande de ressource radio, RRC et indiquant une forme d'onde à utiliser par l'appareil de télécommunication sans fil lors de la transmission d'un second signal sans fil, la forme d'onde indiquée étant indiquée en fonction d'un indicateur de format de créneau, SFI, transporté par la signalisation RRC ; et
transmettre (502) le second signal sans fil dans un créneau formaté selon le SFI à l'aide de la forme d'onde indiquée ;
dans lequel la forme d'onde indiquée est indiquée sur une base de symbole par symbole ; et
dans lequel la forme d'onde indiquée est soit une forme d'onde de préfixe cyclique - multiplexage par répartition orthogonale de la fréquence, CP-OFDM, soit une forme d'onde de transformée de Fourier discrète - étalement - multiplexage par répartition orthogonale de la fréquence, DFT-S-OFDM.

15. Procédé de commande d'un appareil de télécommunications sans fil pour utilisation dans un réseau de télécommunications sans fil, le procédé comprenant la commande de l'appareil de télécommunications sans fil pour :
transmettre (505) un premier signal sans fil à un second appareil de télécommunications sans fil, le premier signal sans fil étant compris dans une signalisation de commande de ressource radio, RRC et indiquant une forme d'onde à utiliser par le second appareil de télécommunications sans fil lors de la transmission d'un second signal sans fil, la forme d'onde indiquée étant indiquée en fonction d'un indicateur de format de créneau, SFI, transporté par la signalisation RRC ;
dans lequel la forme d'onde indiquée est indiquée sur une base de symbole par symbole ; et
dans lequel la forme d'onde indiquée est soit une forme d'onde de préfixe cyclique - multiplexage par répartition orthogonale de la fréquence, CP-OFDM, soit une forme d'onde de transformée de Fourier discrète - étalement - multiplexage par répartition orthogonale de la fréquence, DFT-S-OFDM.
